# EUROPÄISCHE PATENTSCHRIFT

(11) **EP 2 759 423 B1**
(45) Veröffentlichungstag und Bekanntmachung des Hinweises auf die Patenterteilung: **22.04.2015**
(21) Anmeldenummer: 13152882.0
(22) Anmeldetag: 28.01.2013
(51) Int. Cl.: B60G 7/00, B62D 65/12, B29C 70/40, B29C 53/84

(54) **Querlenker aus faserverstärktem Kunststoff für eine Radaufhängung eines Fahrzeuges**
Suspension arm made of fibre-reinforced plastic for a wheel suspension of a vehicle
Bras oscillant transversal en plastique renforcé en fibres pour une suspension de roue d'un véhicule

(43) Veröffentlichungstag der Anmeldung: 30.07.2014
(73) Patentinhaber: Gestamp Umformtechnik GmbH, 33647 Bielefeld (DE)
(72) Erfinder: Dicke, Thomas, 33605 Bielefeld (DE); Buchholz, Mathias, 33615 Bielefeld (DE); Leimkühler, Leslie, 33613 Bielefeld (DE); Kröger, Matthias, 32479 Hille (DE); Sudowe, Ulf, 49124 Georgsmarienhütte (DE); Gross,Thomas, 33335 Gütersloch (DE)
(74) Vertreter: Cohausz & Florack

(56) Entgegenhaltungen:
- EP-A1- 0 874 170
- EP-A2- 2 527 231
- EP-B1- 0 637 520
- EP-B1- 1 368 205
- WO-A1-2012/107272
- DE-A1- 2 651 665
- DE-A1- 19 923 699
- DE-A1-102007 003 596
- DE-A1-102011 000 105
- DE-A1-102011 010 367
- JP-A- 2 030 363
- JP-A- 2 031 906
- JP-A- 2 059 326
- JP-A- 2000 355 206

## Beschreibung

Die Erfindung betrifft einen Querlenker aus faserverstärktem Kunststoff für eine Radaufhängung eines Fahrzeuges, der an mindestens zwei seiner Lagerelemente um eine gemeinsame Schwenkachse oder um im Wesentlichen koaxial zueinander verlaufende Schwenkachsen schwenkbar ist, wobei diese mindestens zwei Lagerelemente durch ein einschaliges, mindestens zwei Verbindungsarme aufweisendes Verbindungselement mit mindestens einem ein Kugelgelenklager aufweisenden Lagerelement verbunden sind, wobei die Lagerelemente und das Verbindungselement Elemente eines einstückigen Kunststoffformteils sind.

Es sind zahlreiche Radaufhängungen für Kraftfahrzeuge bekannt, die verschieden ausgeführte Lenker, insbesondere Querlenker aufweisen. Bei der Auslegung solcher Lenker sind unterschiedliche Ziele zu berücksichtigen, die sich jedoch einander zum Teil entgegenstehen. So soll der Lenker einer Radaufhängung vorzugsweise ein möglichst geringes Gewicht aufweisen, um das Fahrzeuggewicht und damit den Kraftstoffverbrauch zu reduzieren. Andererseits muss der Lenker aber eine ausreichend hohe Stabilität, insbesondere Biegesteifigkeit aufweisen, so dass er den dynamischen Belastungen während des Fahrbetriebes zuverlässig standhält. Außerdem sind in der Regel auch wirtschaftliche Aspekte zu berücksichtigen, die insbesondere bei einer Massenfertigung eine möglichst einfache und kostengünstige Herstellung des Lenkers verlangen.

Aus der DE 199 23 699 A1 ist ein Querlenker für eine Radaufhängung bekannt, der einen im Wesentlichen T-förmigen Grundkörper aufweist, an dessen Endabschnitten jeweils eine Lagerstelle ausgebildet ist. Der Grundkörper ist dabei als Leichtbau-Gussteil einstückig aus Leichtmetall, vorzugsweise aus Aluminium oder Magnesium gefertigt. Das hierzu verwendete Druckgussverfahren ermöglicht es, zugleich auch die Lagerstellen in Form von Lageraugen einstückig mit dem Grundkörper auszubilden. Der Grundkörper weist dabei in weiten Bereichen ein im Wesentlichen Doppel-T-förmiges Querschnittsprofil auf.

Ferner sind in der DE 199 23 699 A1 auch Querlenker erwähnt, die aus zwei miteinander verschweißten Stahlblechschalen bestehen und somit als Hohlkörper ausgebildet sind. Diese bekannten Querlenker aus Stahlblech sind jedoch relativ schwer und zudem in der Herstellung relativ aufwendig.

In der EP 1 368 205 B1 wird ein Querlenker für eine Radaufhängung vorgeschlagen, der sich bei geringem Gewicht einfach und kostengünstig herstellen lassen soll. Der dort offenbarte Querlenker ist eine Schweißkonstruktion und umfasst mindestens zwei Lagerelemente und ein einschaliges, die Lagerelemente miteinander verbindendes Verbindungselement. Das Verbindungselement ist aus einem einstückigen, die Lagerelemente verbindenden Steg und mindestens einem Gurt gebildet, der an einem Rand des Stegs an denselben durch eine Schweißnaht befestigt ist. Der Steg ist im Wesentlichen rechtwinklig an den Gurt angesetzt, wobei der Gurt bzw. die Gurte sich bis zu den Lagerelementen erstrecken. Der Steg und der mindestens eine daran angeschweißte Gurt bestehen vorzugsweise aus Stahlblech. Ferner ist in der EP 1 368 205 B1 erwähnt, dass der Steg und/oder die Gurte alternativ auch aus einem Kunststoff oder einem Faserverbundwerkstoff hergestellt sein können.

Aus der EP 0 637 520 B1 ist ein aus faserverstärktem Kunststoff hergestellter Querlenker der eingangs genannten Art bekannt. Der bekannte Querlenker weist ein radseitiges Lagerelement zur gelenkigen Anbindung an einem Abschnitt eines Fahrzeugrades und zwei fahrzeugseitige Lagerelemente zur gelenkigen Anbindung an einem Abschnitt der Fahrzeugkarosserie auf. Das radseitige Lagerelement ist über zwei Verbindungsarme mit den fahrzeugseitigen Lagerelementen verbunden. Der jeweilige Verbindungsarm ist so geformt, dass er in seinem mittleren Längenabschnitt eine Dicke aufweist, die größer als in Längenabschnitten ist, die vor und hinter dem mittleren Längenabschnitt liegen, wobei die Dicke in einer vertikalen Richtung des Fahrzeuges gemessen wird. Zudem weist der jeweilige Verbindungsarm in dem mittleren Längenabschnitt eine Breite auf, die kleiner als in den Längenabschnitten ist, die vor und hinter dem mittleren Längenabschnitt liegen, wobei die Breite in einer Längsrichtung des Fahrzeuges gemessen wird. Der Querlenker wird unter Verwendung eines mit Kunstharz durchtränkten Fasergeflechts hergestellt, das auf das radseitige Lagerelement und die fahrzeugseitigen Lagerelemente gewickelt wird. Das Fasergeflecht wird dabei gemäß einer ersten Fertigungsvariante in einer Nut eines Formwerkzeuges platziert, wobei die Nut der gewünschten Form der Verbindungsarme entspricht, und in die Nut durch Verwendung einer Walze gedrückt. Eine zweite Fertigungsvariante sieht dagegen die Verwendung von Schablonen vor, die in Übereinstimmung mit der gewünschten Form der Verbindungsarme angeordnet werden. Das Aushärten des Kunstharzes erfolgt bei beiden Fertigungsvarianten durch aufbringen von Wärme. Die Herstellung dieses bekannten Querlenkers ist durch das Aufwickeln des Fasergeflechtes sehr zeit- und kostenaufwendig.

Der vorliegenden Erfindung liegt die Aufgabe zugrunde, einen weiteren Querlenker der eingangs genannten Art anzugeben, der bei ausreichender Bauteilfestigkeit sowie Biegesteifigkeit ein relativ geringes Gewicht aufweist und sich einfach und kostengünstig herstellen lässt.

Zur Lösung dieser Aufgabe wird ein Querlenker mit den Merkmalen des Anspruchs 1 vorgeschlagen. Bevorzugte und vorteilhafte Ausgestaltungen des erfindungsgemäßen Querlenkers sind in den Unteransprüchen angegeben.

Der erfindungsgemäße Querlenker ist an mindestens zwei seiner Lagerelemente um eine gemeinsame Schwenkachse oder um im Wesentlichen koaxial zueinander verlaufende Schwenkachsen schwenkbar, wobei diese mindestens zwei Lagerelemente durch ein einschaliges, mindestens zwei Verbindungsarme aufweisendes Verbindungselement mit mindestens einem ein Kugelgelenklager aufweisenden Lagerelement verbunden sind. Die Lagerelemente und das Verbindungselement sind dabei Elemente eines einstückigen Kunststoffformteils. Erfindungsgemäß ist das einstückige Kunststoffformteil durch Fließpressen von Fasern enthaltendem Kunststoff hergestellt, wobei die Lagerelemente durch Fließpressen des Kunststoffs stoffschlüssig eingefasste Lagerbuchsen oder Lagerschalen aufweisen, wobei das Kugelgelenklager eine Lagerbuchse oder eine schalenförmige Gleitkapsel aufweist, die aus Kunststoff hergestellt und stoffschlüssig mit dem Verbindungselement verbunden ist, wobei das Verbindungselement einen die Lagerelemente verbindenden Mittel- oder Quersteg und mindestens einen Randsteg umfasst, der mit dem Mittel- oder Quersteg verbunden ist und mit demselben einen Winkel, vorzugsweise einen im Wesentlichen rechten Winkel definiert.

Bei dem erfindungsgemäßen Querlenker kann es sich insbesondere um einen sogenannten Dreieckslenkers handeln.

Der erfindungsgemäße Querlenker besitzt aufgrund seines Werkstoffes ein relativ geringes Gewicht. Insbesondere ermöglicht die Herstellung des Querlenkers durch Fließpressen, verschiedene Bereiche des Querlenkers mit unterschiedlicher Stegdicke auszuführen, so dass der Querlenker optimal auf die im Fahrbetrieb auftretenden dynamischen Belastungen ausgelegt werden kann. Die im Kunststoff integrierten Fasern bewirken eine hohe Bauteilfestigkeit sowie Biegesteifigkeit des Querlenkers. Zudem trägt die profilförmige Struktur des Verbindungselements zu einer hohen Bauteilfestigkeit sowie Biegesteifigkeit bei. Insbesondere lässt sich der erfindungsgemäße Querlenker mittels eines vorzugsweise einstufigen Pressprozesses, bei dem Lagerbuchsen und/oder Lagerschalen in das Formpresswerkzeug eingelegt und während des Fließpressen von dem Fasern enthaltenden Kunststoff umflossen werden, in großen Stückzahlen kostengünstig herstellen. Bei dem zur Herstellung des erfindungsgemäßen Querlenkers verwendeten faserverstärkten Kunststoff kann es sich um duroplastischen oder thermoplastischen Kunststoff handeln.

Während des Fließpressens umfließt der faserverstärkte Kunststoff des Querlenkers die Gleitkapsel (Lagerschale) des Kugelgelenklagers und verbindet sich stoffschlüssig mit derselben. Der Kunststoff der Gleitkapsel ist dabei auf den faserverstärkten Kunststoff des Querlenkers abgestimmt. Eine Besonderheit der vorliegenden Erfindung ist also, dass das Einbringen des Kugelgelenkes in den einstufigen Pressprozess integriert wird und somit ein nachträgliches Einpressen eines Kugelgelenkes in den Querlenker entfällt. Hierdurch lassen sich die Herstellungs- bzw. Montagekosten des Querlenkers weiter verringern.

Nach einer besonders bevorzugten Ausgestaltung wird der erfindungsgemäße Querlenker aus SMC-Halbzeug hergestellt. Bei SMC (Sheet Molding Compound) handelt es sich um folien- oder plattenförmige Pressmatten aus duroplastischen Reaktionsharzen und Glasfasern. Als Reaktionsharze werden beispielsweise Polyester- oder Vinylesterharze verwendet. Die Glasfasern weisen typischerweise eine Faserlänge im Bereich von 20 mm bis 60 mm auf und liegen im SMC-Halbzeug vorzugsweise in Mattenform vor. Diese Pressmatten (Harzmatten) enthalten zudem typischerweise Füllstoffe, vorzugsweise Calciumcarbonat und/oder Gesteinsmehl, sowie weitere Additive, insbesondere Additive zur Schwundreduktion. Darüber hinaus können die SMC-Halbzeuge Inhibitoren, inerte Trennmittel, Peroxide als Beschleuniger oder Reaktionsmittel, Farbstoff, Flammschutzmittel und/oder leitende Zusätze enthalten. Die Bestandteile von SMC-Halbzeugen liegen in diesen vorgemischt und weiterverarbeitungsfertig vor. Das SMC-Halbzeug lässt sich in gewünschte Größen bzw. Grundrisse zuschneiden und mittels Fließpressen zu dem fertigen Bauteil (Querlenker) weiter verarbeiten. Beim Pressen können bereits Lagerbuchsen und/oder Lagerschalen in das Pressformwerkzeug eingelegt werden. Hierdurch lässt sich der erfindungsgemäße Querlenker besonders wirtschaftlich herstellen. Die Füllstoffe dienen zur Gewichts- und Kostenreduktion.

Die der Weiterverarbeitung des SMC-Halbzeuges (Harzmatte) dienende Presse weist beheizte Formwerkzeuge auf. Die Harzmatte wird in Abhängigkeit von der Größe und Geometrie des herzustellenden Querlenkers in entsprechende Mattenstücke zerteilt und nach einem definierten Einlegeplan in dem Pressformwerkzeug angeordnet. In der Schließphase der Presse wird die Harzmatte bzw. werden die Harzmatten im Werkzeug durch Fließen verteilt. Auf diese Weise lassen sich dreidimensionale Geometrien mit unterschiedlichen Wand- bzw. Stegdicken in nur einem Prozessschritt einfach und zuverlässig herstellen. Nach einer Aushärtezeit von ca. 30 Sekunden bis zu mehreren Minuten bei Temperaturen im Bereich von ca. 120°C bis 160°C, wobei die Dauer der Aushärtung und die Höhe der Aushärtetemperatur von der Bauteildicke und dem verwendeten Reaktionsharz abhängt, kann das fertige Bauteil (Querlenker) aus dem geöffneten Formbauteil entnommen werden. Vorzugsweise werden für die Herstellung des erfindungsgemäßen Fahrwerksbauteils solche Reaktionsharze ausgewählt, die dem fertigen, ausgehärteten Fahrwerksbauteil eine Temperaturbeständigkeit bis mindestens 95° verleihen.

Alternativ oder ergänzend zu Glasfasern kann die Kunststoffmatrix des erfindungsgemäßen Querlenkers auch andere Verstärkungsfasern enthalten, beispielsweise Kohlenstofffasern, Keramikfasern, Aramidfasern und/oder Nylonfasern.

Eine bevorzugte Ausgestaltung des erfindungsgemäßen Querlenkers sieht vor, dass das Verbindungselement mindestens zwei von dem Mittel- oder Quersteg vorstehende Randstege aufweist. Durch diese Ausgestaltung lässt sich eine hohe Biegefestigkeit des Querlenkers bei geringem Bauteilgewicht erzielen.

Hinsichtlich einer hohen Biegefestigkeit und eines möglichst geringen Gewichtes des Querlenkers ist es ferner günstig, wenn gemäß einer bevorzugten Weiterbildung der vorgenannten Ausgestaltung die Randstege mit unterschiedlicher Wanddicke ausgebildet sind, wobei die Wanddicke des dickeren Randsteges mindestens das 1,1-fache, vorzugsweise mindestens das 1,2-fache der Wanddicke des dünneren Randsteges beträgt.

Eine weitere vorteilhafte Ausgestaltung des erfindungsgemäßen Querlenkers ist dadurch gekennzeichnet, dass das Verbindungselement mindestens zwei von dem Mittel- oder Quersteg vorstehende Randstege und mindestens eine dazwischen verlaufende Rippe aufweist, wobei die mindestens eine Rippe einstückig an den Mittel- oder Quersteg angeformt ist und sich zumindest über eine Teillänge der Randstege entlang derselben erstreckt. Durch diese Ausgestaltung lässt sich eine besonders hohe Biegefestigkeit des Querlenkers bei geringem Bauteilgewicht erzielen.

Hinsichtlich einer hohen Biegefestigkeit des Querlenkers bei geringem Bauteilgewicht ist es ferner vorteilhaft, wenn der Abstand der mindestens einen Rippe von dem dickeren Randsteg um mindestens 10%, vorzugsweise um mindestens 20% kleiner als der Abstand der Rippe von dem dünneren Randsteg ist.

Eine weitere bevorzugte Ausgestaltung des erfindungsgemäßen Querlenkers ist dadurch gekennzeichnet, dass die Rippe eine Höhe aufweist, die kleiner als die Höhe oder gleich der Höhe des mindestens einen von dem Mittel- oder Quersteg des Verbindungselements vorstehenden Randsteges ist. Auch durch diese Ausgestaltung kann die Biegesteifigkeit des Querlenkers bei relativ geringem Bauteilgewicht verbessert werden.

Hinsichtlich eines geringen Bauteilgewichts und einer hohen dynamischen Belastbarkeit des Querlenkers sieht eine besonders bevorzugte Ausgestaltung der Erfindung vor, dass das die Lagerelemente des Querlenkers verbindende, zweiarmige Verbindungselement einen die Verbindungsarme miteinander verbindenden Kehlsteg aufweist, der an dem das Kugelgelenklager aufweisenden Lagerelement angeordnet ist.

Eine weitere bevorzugte Ausgestaltung des erfindungsgemäßen Querlenkers besteht in diesem Zusammenhang darin, dass der Kehlsteg in das Lagerelement einstückig übergeht. Hierdurch wird die Biegesteifigkeit des Querlenkers im Bereich des Lagerelements bzw. seines radseitigen Kugelgelenklagers weiter verbessert. Auch ist es diesbezüglich vorteilhaft, wenn der Kehlsteg gemäß einer weiteren bevorzugten Ausgestaltung der Erfindung mit einem einstückig angeformten Randsteg versehen ist, der mit dem Kehlsteg einen im Wesentlichen rechten Winkel definiert. Die Höhe des am Kehlsteg einstückig angeformten Randsteges ist dabei in weiterer Ausgestaltung des erfindungsgemäßen Lenkers vorzugsweise kleiner als die Höhe oder gleich der Höhe des von dem Mittel- oder Quersteg des Verbindungselements vorstehenden Randsteges.

Eine weitere vorteilhafte Ausgestaltung des erfindungsgemäßen Querlenkers ist dadurch gekennzeichnet, dass die Lagerelemente, die eine gemeinsame Schwenkachse oder im Wesentlichen koaxial zueinander verlaufende Schwenkachsen definieren, jeweils mit einer einen Metall-Gummi-Verbund und/oder einer einen Kunststoff-Gummi-Verbund aufweisenden Lagerbuchse versehen sind. Hierdurch lässt sich eine optimale Lagerung des Querlenkers, insbesondere eine zuverlässige Funktionsweise bei hoher dynamischer Belastung erzielen.

Des Weiteren besteht eine vorteilhafte Ausgestaltung des erfindungsgemäßen Querlenkers darin, dass an dem mindestens einen weiteren Lagerelement ein Kragen ausgebildet ist, der mindestens eine Ringnut und/oder mindestens einen radial vorstehenden Vorsprung zur formschlüssigen Anbindung einer Dichtungsmanschette aufweist. Hierdurch lässt sich eine einfache und zuverlässige Befestigung einer das Lagerelement vor Verschmutzung und/oder abrasiver Beanspruchung schützenden Dichtung an dem Querlenker erzielen.

Eine weitere vorteilhafte Ausgestaltung des erfindungsgemäßen Querlenkers ist dadurch gekennzeichnet, dass dieser Körperbereiche mit unterschiedlichem Faser-Füllstoff-Gewichtsanteilverhältnis, unterschiedlichem Kunstharz-Füllstoff-Gewichtsanteilverhältnis und/oder unterschiedlicher Faserbeschaffenheit, insbesondere Faserlänge aufweist. Beispielsweise kann der Fasergewichtsanteil im Bereich der Lagerelemente größer sein als im Bereich des Mittel- oder Quersteges des Verbindungselements. Auch kann beispielsweise der Füllstoffgewichtsanteil im Bereich des Mittel- oder Quersteges des Verbindungselements größer sein als im Bereich der Lagerelemente. Durch diese Ausgestaltung kann eine belastungsoptimierte, maßgeschneiderte Auslegung des erfindungsgemäßen Querlenkers weiter verbessert werden.

Nachfolgend wird die Erfindung anhand einer mehrere Ausführungsbeispiele darstellenden Zeichnung näher erläutert. Es zeigen.
- Fig. 1: einen erfindungsgemäßen Querlenker in perspektivischer Darstellung;
- Fig. 2: eine Schnittansicht eines Abschnitts des Querlenkers entlang der Linie II-II in Fig. 1;
- Fig. 3: eine Schnittansicht eines Abschnitts des Querlenkers entlang der Linie III-III in Fig. 1;
- Fig. 4: ein Ausführungsbeispiel eines erfindungsgemäßen Querlenkers in einer Schnittansicht eines Querlenkerabschnitts, ähnlich der Fig. 3;
- Fig. 5: ein weiteres Ausführungsbeispiel eines erfindungsgemäßen Querlenkers in einer Schnittansicht eines Querlenkerabschnitts, ähnlich der Fig. 2; und
- Fig. 6: ein weiteres Ausführungsbeispiel eines ein Lagerelement aufweisenden Abschnittes eines erfindungsgemäßen Querlenkers.

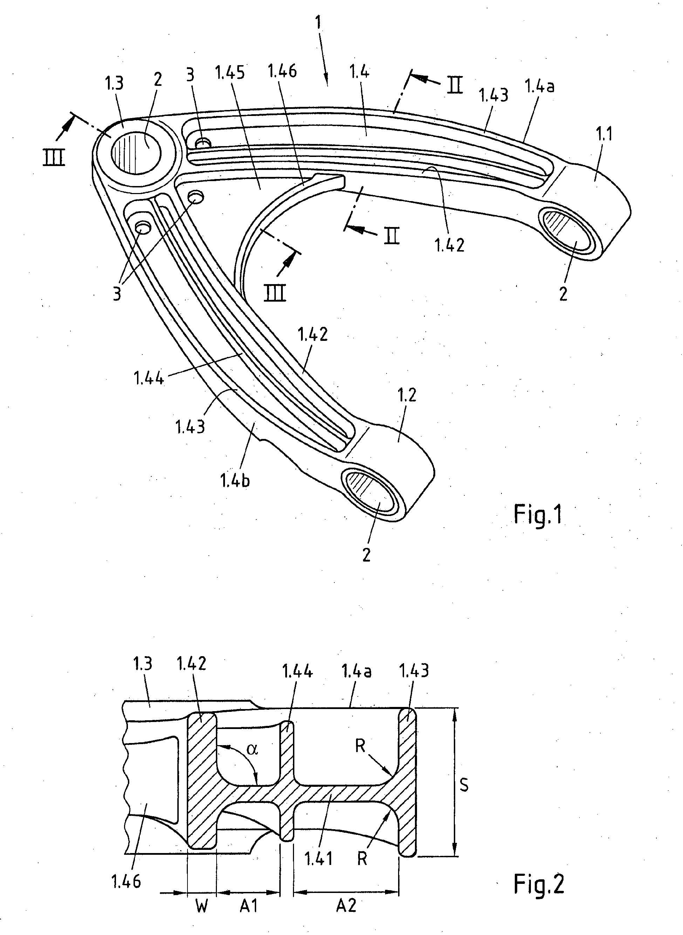

Die Figuren 1 bis 3 zeigen ein erstes Ausführungsbeispiel eines erfindungsgemäßen Querlenkers 1 für eine Radaufhängung eines Kraftfahrzeuges. Der Querlenker 1 besitzt zwei achsträgerseitige Lagerelemente 1.1, 1.2 und ein radträgerseitiges Lagerelement 1.3, die über ein einschaliges Verbindungselement 1.4 miteinander verbunden sind. Die Lagerelemente 1.1, 1.2, 1.3 sind dabei jeweils buchsenförmig ausgebildet und weisen eine Durchgangsöffnung auf. Die Durchgangsöffnungen der achsträgerseitigen Lagerelemente 1.1, 1.2 definieren eine gemeinsame Schwenkachse. Alternativ kann der Querlenker 1 aber auch derart ausgebildet sein, dass die achsträgerseitigen Lagerelemente 1.1, 1.2 um im Wesentlichen koaxial zueinander verlaufende Achsen schwenkbar sind. Die Durchgangsöffnung des radträgerseitigen Lagerelements 1.3 verläuft quer oder senkrecht zu der jeweiligen Längsmittelachse (Schwenkachse) der achsträgerseitigen Lagerelemente 1.1, 1.2.

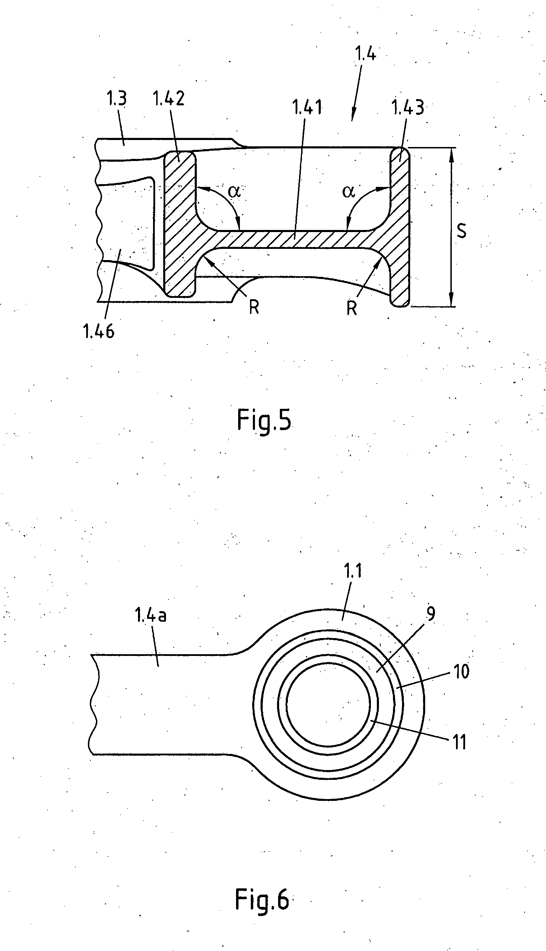

Die Lagerelemente 1.1, 1.2, 1.3 und das Verbindungselement 1.4 sind Elemente eines einstückigen Kunststoffformteils, das durch Fließpressen von thermoplastischem oder duroplastischem, Fasern enthaltendem Kunststoff hergestellt ist. Die Lagerelemente 1.1, 1.2, 1.3 umfassen Lagerbuchsen 2 (9, 10, 11 vgl. Fig. 6) aus Kunststoff und/oder Metall. Zur Herstellung des Querlenkers 1 werden die Lagerbuchsen 2 in ein geteiltes Pressformwerkzeug (nicht gezeigt) eingelegt, in das zudem eine vorgemischte Pressmasse aus thermoplastischem Kunstharz oder duroplastischem Reaktionsharz (Kunstharz) und Verstärkungsfasern, vorzugsweise Glasfasern eingebracht wird. Die Pressmasse stellt ein Halbzeug dar und enthält neben dem thermoplastischen bzw. vernetzungsfähigen Kunstharz und den Verstärkungsfasern vorzugsweise auch mineralische Füllstoffe. Des Weiteren kann das Halbzeug (faserverstärktes Kunstharz-Füllstoff-Gemisch) auch Additive, beispielsweise Additive zur Schwundreduktion, Inhibitoren, Peroxide, Flammschutzmittel und/oder Farbstoffe enthalten. Die Fasern, vorzugsweise Glasfasern, haben eine Faserlänge im Bereich von 20 mm bis 60 mm, vorzugsweise im Bereich von 25 mm bis 50 mm, und können in Matten- und/oder Gewebeform in dem Halbzeug vorliegen. Die als Pressmasse dienenden Halbzeuge sind plattenförmig, folien- oder mattenartig ausgebildet.

Die Weiterverarbeitung der beispielsweise in Form einer Harzmatte vorliegenden Pressmasse erfolgt in einem beheizten Pressformwerkzeug. Die Pressmasse (Harzmatte, -folie oder Harzplatte) wird in Abhängigkeit der Geometrie der Kavität des Pressformwerkzeuges bzw. der Größe und Geometrie des herzustellenden Lenkers in genau definierte Abschnitte zugeschnitten und nach einem definierten Einlegeplan in der Werkzeugkavität platziert.

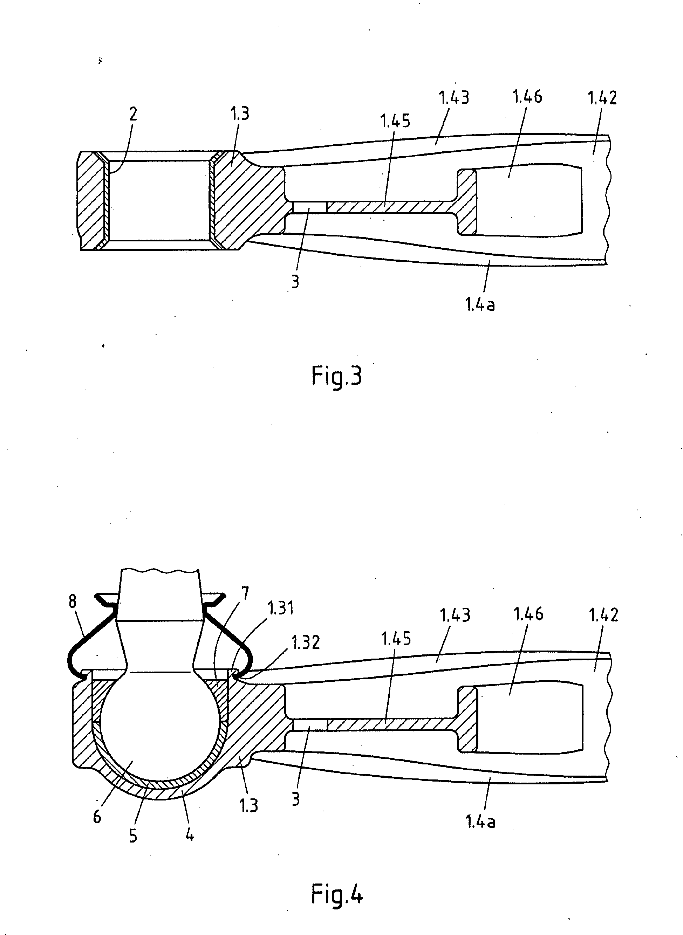

Durch Schließen des Pressformwerkzeuges wird die Pressmasse in der Werkzeugkavität durch Fließpressen verteilt und füllt die geschlossene Werkzeugkavität - bis auf die Durchgangsöffnungen der in das Werkzeug eingelegten Lagerbuchsen - im Wesentlichen vollständig aus. Die Lagerbuchsen 2 werden beim Schließen des Pressformwerkzeuges von der Pressemasse umflossen, so dass sie schließlich stoffschlüssig in den Lagerelementen 1.1, 1.2, 1.3 des Querlenkers 1 eingefasst sind. Alternativ oder ergänzend zu Lagerbuchen 2 können auf diese Weise auch Lagerschalen (5) in den Querlenker 1 stoffschlüssig eingebettet werden (vgl. Fig. 3 und 4).

In die im Lagerelement 1.3 vorgesehene Lagerbuchse 2 kann ein (in Fig. 1 nicht gezeigtes) Kugelgelenklager eingesetzt werden. Eine Gelenkschale des Kugelgelenklagers oder Teile einer solchen Gelenkschale können zur form- und/oder kraftschlüssigen Verbindung mit der Lagerbuche 2 mit Befestigungselementen, beispielsweise Rastelementen versehen sein.

Das Verbindungselement 1.4 des erfindungsgemäßen Querlenkers umfasst einen die Lagerelemente 1.1, 1.3 bzw. 1.2, 1.3 verbindenden Mittel- oder Quersteg 1.41 und mindestens einen Randsteg 1.42 bzw. 1.43, der mit dem Mittel- oder Quersteg 1.41 verbunden ist und mit demselben einen Winkel (α), vorzugsweise einen im Wesentlichen rechten Winkel definiert.

In dem in den Figuren 1 bis 3 dargestellten Ausführungsbeispiel weist das Verbindungselement 1.4 zwei bogenförmige Verbindungsarme 1.4a, 1.4b auf, die jeweils an einem ihrer Enden einstückig in eines der achsträgerseitigen Lagerelemente 1.1, 1.2 und an ihrem anderen Ende einstückig in das radträgerseitige Lagerelement 1.3 übergehen. Dieser Querlenker ist somit insgesamt betrachtet im Wesentlichen V- oder U-förmig ausgebildet.

Im Querschnitt betrachtet weist der jeweilige Arm 1.4a, 1.4b des Querlenkers 1 vorzugsweise ein Doppel-T-Profil auf. Alternativ kann der jeweilige Verbindungsarm 1.4a, 1.4b auch ein I-Profil oder H-Profil aufweisen.

Vorzugsweise ist an dem Quer- oder Mittelsteg 1.41 zwischen dem äußeren Randsteg 1.43 und dem inneren Randsteg 1.42 des I-, Doppel-T- oder H-Profils eine Rippe 1.44 einstückig angeformt. Die Randstege 1.42, 1.43 sowie gegebenenfalls die Rippe 1.44 erstrecken sich von den achsträgerseitigen Lagerelementen 1.1, 1.2 durchgehend bis zu dem radträgerseitigem Lagerelement 1.3.

Der innere Randsteg 1.42 ist dabei vorzugsweise mit größerer Wanddicke als der äußere Randsteg 1.43 ausgebildet. Die Wanddicke W des inneren Randstegs 1.42 kann maximal das 3-fache der Wanddicke des äußeren Randsteges 1.43 betragen. Ferner liegen die Steghöhen S zwischen dem 2- bis 10-fachen der Wanddicke W des inneren bzw. dickeren Randsteges 1.42. Der Quer- oder Mittelsteg 1.41 ist dünner als der innere bzw. dickere Randsteg 1.42. Die Höhe S des dünneren bzw. äußeren Randsteges 1.43 ist zumindest abschnittsweise größer als die Höhe des dickeren bzw. inneren Randsteges 1.42 (vgl. Fig. 2 und 3) .

Die Rippe 1.44 ist deutlich näher an dem dickeren bzw. inneren Randsteg 1.42 als an dem dünneren bzw. äußeren Randsteg 1.43 angeordnet. Der Abstand A1 der Rippe 1.44 von dem dickeren bzw. inneren Randsteg 1.42 ist um ca. 15% bis 25% kleiner als der Abstand A2 der Rippe 1.44 von dem dünneren bzw. äußeren Randsteg 1.43.

Benachbart zu dem radträgerseitigen Lagerelement 1.3 ist eine Versteifung vorgesehen. Die Versteifung ist aus einem Kehlsteg 1.45 gebildet, der die bogenförmigen Verbindungsarme 1.4a, 1.4b bzw. die inneren Randstege 1.42 miteinander verbindet. Der Kehlsteg 1.45 geht einstückig in die inneren Randstege 1.42 der Verbindungsarme 1.4a, 1.4b über. Darüber hinaus geht der Kehlsteg 1.45 auch einstückig in das radträgerseitige Lagerelement 1.3 des Querlenkers 1 über. Vorzugsweise ist auch der Kehlsteg 1.45 mit einem einstückig angeformten Randsteg 1.46 versehen. Der Randsteg 1.46 steht im Wesentlichen rechtwinklig gegenüber dem Kehlsteg 1.45 vor. Das Querschnittsprofil der aus dem Kehlsteg 1.45 und dem Randsteg 1.46 gebildeten Versteifung entspricht somit im Wesentlichen einem T-Profil. Mit 3 sind Löcher bezeichnet, die einen Abfluss von Wasser aus den durch die Randstege 1.43, 1.42. 1.46 eingefassten Bereichen des Querlenkers 1 ermöglichen.

Der Randsteg 1.46 weist eine deutlich größere Wandstärke als der Kehlsteg 1.45 auf. Die Wandstärke des Randsteges 1.46 beträgt vorzugsweise das 1,5- bis 3-fache der Wandstärke des Kehlsteges 1.45. Die Höhe des Randsteges 1.46 nimmt zur Symmetriemittelachse (= Schnittlinie III-III in Fig. 1) des V-förmigen Querlenkers 1 hin ab. Der Randsteg 1.46 kann allerdings auch mit konstanter Steghöhe ausgebildet sein. Ferner ist in den Figuren 1 und 3 zu erkennen, dass der Randsteg 1.46 des Kehlsteges 1.45 eine Steghöhe aufweist, die kleiner als die Höhe des inneren Randsteges 1.42 des jeweiligen Verbindungsarms 1.4a, 1.4b ist. Alternativ liegt aber auch eine Ausgestaltung im Rahmen der Erfindung, bei welcher der Randsteg 1.46 des Kehlsteges 1.45 eine Steghöhe aufweist, die gleich der Steghöhe des inneren Randsteges 1.42 des jeweiligen Verbindungsarms 1.4a, 1.4b ist. Der Randsteg 1.46 ist konkav gekrümmt. Der Kehlsteg 1.45 mit dem Randsteg 1.46 erstreckt sich über eine bestimmte Länge des jeweiligen Verbindungsarms 1.4a, 1.4b, die etwa im Bereich von 20% bis 40% der Gesamtlänge des jeweiligen Verbindungsarms 1.4a, 1.4b liegt.

In Fig. 4 ist eine besonders bevorzugte Ausgestaltung des radträgerseitigen Lagerelements 1.3 des erfindungsgemäßen Querlenkers 1 dargestellt. Dieses Ausführungsbeispiel unterscheidet sich von dem Ausführungsbeispiel gemäß den Figuren 1 bis 3 dadurch, dass das radträgerseitige Lagerelement 1.3 nicht eine eine Durchgangsöffnung aufweisende Lagerbuchse 2 umfasst, sondern als Kugelgelenklager 4 ausgebildet ist. Das Auge 1.3 des Kugelgelenklagers 4 ist aus dem gleichen Werkstoff wie das Verbindungselement 1.4 bzw. die Verbindungsarme 1.4a, 1.4b und die anderen Lagerelemente 1.1, 1.2 des Querlenkers 1 hergestellt. Es ist einstückig mit den Verbindungsarmen 1.4a, 1.4b und dem Kehlsteg 1.45 verbunden.

In dem Lagerelement 1.3 ist eine Lagerschale bzw. schalenförmige Gleitkapsel (Lagerschale) 5 form- und stoffschlüssig eingebettet, in der ein Kugelgelenkkopf 6 sitzt. Der Kugelgelenkkopf 6 ist in dem Lagerelement 1.3 ferner durch einen Ring oder Ringsegmente 7 gehalten, dessen Innenseite bzw. deren Innenseiten an die Form des Kugelgelenkkopfes 6 angepasst sind.

Zur Herstellung der in Fig. 4 dargestellten Ausführungsform des erfindungsgemäßen Querlenkers 1 wird auf den Kugelgelenkkopf 6 vor dem Einlegen in das Presswerkzeug die schalenförmige Gleitkapsel (Lagerschale) 5 formschlüssig angebracht, vorzugsweise aufgeklipst. Die Gleitkapsel (Lagerschale) 5 ist vorzugsweise aus Kunststoff hergestellt. Während des Fließpressens umfließt der faserhaltige, duroplastische Kunststoff des Querlenkers 1 die Lagerschale 5 und verbindet sich stoffschlüssig mit derselben. Der Kunststoff der Lagerschale 5 ist dabei auf den faserhaltigen, duroplastischen Kunststoff des Querlenkers 1 abgestimmt.

An dem Lagerelement 1.3 des Querlenkers 1 ist ferner ein Kragen 1.31 ausgebildet, der eine Ringnut 1.32 zur formschlüssigen Anbindung einer Dichtungsmanschette 8 aufweist.

Das Ausführungsbeispiel gemäß Fig. 5 zeigt, dass das Verbindungselement 1.4 bzw. der Arm 1.4a, 1.4b des V-förmigen Querlenkers 1 auch ohne die in den Figuren 1 und 2 dargestellte Rippe 1.44 (aber ansonsten wie in Fig. 1 dargestellt) ausgebildet werden kann. Die Ausführung des Lenkers 1 mit einer oder mehreren Rippen 1.44 gemäß den Figuren 1 und 2 ist optional und bei bestimmten Festigkeitsanforderungen besonders vorteilhaft.

Ferner ist in den Fig. 2 und 5 zu erkennen, dass der Kehlbereich zwischen dem Quer- oder Mittelsteg 1.41 und dem jeweiligen Randsteg 1.42, 1.43 gerundet ausgebildet ist. Der Radius R des Kehlbereichs ist vorzugsweise größer als die Wanddicke des dünneren bzw. äußeren Randsteges 1.43.

In Fig. 6 ist ein Ausführungsbeispiel des erfindungsgemäßen Querlenkers 1 skizziert, bei dem die achsträgerseitigen Lagerelemente 1.1 (bzw. 1.2), die eine gemeinsame Schwenkachse oder im Wesentlichen koaxial zueinander verlaufende Schwenkachsen definieren, jeweils mit einer einen Metall-Gummi-Verbund und/oder einen Kunststoff-Gummi-Verbund aufweisenden Lagerbuchse versehen sind. Dabei ist ein buchsenförmiger Gummikörper 9 form- und/oder stoffschlüssig zwischen Buchsen oder Hülsen 10, 11 aus Metall, vorzugsweise Stahl, bzw. Kunststoff angeordnet, wobei die äußere Buchse oder Hülse 10 form- und stoffschlüssig in dem achsträgerseitigen Lagerelement 1.1 (bzw. 1.2) des Querlenkers 1 eingefasst ist.

Die Ausführung der Erfindung ist nicht auf die vorstehend beschriebenen bzw. in der Zeichnung dargestellten Ausführungsbeispiele beschränkt. Vielmehr sind zahlreiche Varianten denkbar, die auch bei einer von den dargestellten Ausführungsbeispielen abweichenden Gestaltung von der in den beiliegenden Ansprüchen angegebenen Erfindung Gebrauch machen.

Die vorliegende Erfindung umfasst insbesondere auch eine Ausgestaltung, bei der Pressmassen mit unterschiedlicher Beschaffenheit zur Herstellung des jeweiligen Querlenkers 1 verwendet werden. Der erfindungsgemäße Querlenker weist in diesem Fall beispielsweise Körperbereiche mit unterschiedlichem Faser-Füllstoff-Gewichtsanteilverhältnis, unterschiedlichem Kunstharz-Füllstoff-Gewichtsanteilverhältnis und/oder unterschiedlicher Faserbeschaffenheit, insbesondere unterschiedlicher Faserlänge auf. Insbesondere durch diese Ausgestaltung lässt sich ein maßgeschneiderter Querlenker mit optimalen Festigkeitseigenschaften bei minimalem Gewicht erzielen.

## Patentansprüche

1. Querlenker (1) aus faserverstärktem Kunststoff für eine Radaufhängung eines Fahrzeuges, der an mindestens zwei seiner Lagerelemente (1.1, 1.2) um eine gemeinsame Schwenkachse oder um im Wesentlichen koaxial zueinander verlaufende Schwenkachsen schwenkbar ist, wobei diese mindestens zwei Lagerelemente (1.1, 1.2) durch ein einschaliges, mindestens zwei Verbindungsarme (1.4a, 1.4b) aufweisendes Verbindungselement (1.4) mit mindestens einem ein Kugelgelenklager (4) aufweisenden Lagerelement (1.3) verbunden sind, wobei die Lagerelemente (1.1, 1.2, 1.3) und das Verbindungselement (1.4) Elemente eines einstückigen Kunststoffformteils sind, **dadurch gekennzeichnet, dass** das einstückige Kunststoffformteil durch Fließpressen von Fasern enthaltendem Kunststoff hergestellt ist, wobei die Lagerelemente (1.1, 1.2, 1.3) durch Fließpressen des Kunststoffs stoffschlüssig eingefasste Lagerbuchsen (2, 10) oder Lagerschalen (5) aufweisen, wobei das Kugelgelenklager (4) eine Lagerbuchse (2) oder eine schalenförmige Gleitkapsel (5) aufweist, die aus Kunststoff hergestellt und stoffschlüssig mit dem Verbindungselement (1.4) verbunden ist, wobei das Verbindungselement einen die Lagerelemente (1.1, 1.2, 1.3) verbindenden Mittel- oder Quersteg (1.41) und mindestens einen Randsteg (1.42, 1.43) umfasst, der mit dem Mittel- oder Quersteg (1.41) verbunden ist und mit demselben einen Winkel (α), vorzugsweise im Wesentlichen rechten Winkel definiert.

2. Querlenker nach Anspruch 1,
**dadurch gekennzeichnet, dass** das Verbindungselement (1.4) mindestens zwei von dem Mittel- oder Quersteg (1.41) vorstehende Randstege (1.42, 1.43) aufweist.

3. Querlenker nach Anspruch 2,
**dadurch gekennzeichnet, dass** die Randstege (1.42, 1.43) mit unterschiedlicher Wanddicke ausgebildet sind, wobei die Wanddicke (W) des dickeren Randsteges (1.42) mindestens das 1,1-fache, vorzugsweise mindestens das 1,2-fache der Wanddicke des dünneren Randsteges (1.43) beträgt.

4. Querlenker nach Anspruch 2 oder 3,
**dadurch gekennzeichnet, dass** das Verbindungselement (1.4) mindestens eine zwischen den mindestens zwei Randstegen (1.42, 1.43) verlaufende Rippe (1.44) aufweist, wobei die mindestens eine Rippe (1.44) einstückig an den Mittel- oder Quersteg (1.41) angeformt ist und sich zumindest über eine Teillänge der Randstege (1.42, 1.43) entlang derselben erstreckt.

5. Querlenker nach den Ansprüchen 3 und 4,
**dadurch gekennzeichnet, dass** der Abstand (A1) der mindestens einen Rippe (1.44) von dem dickeren Randsteg (1.42) um mindestens 10%, vorzugsweise um mindestens 20% kleiner ist als der Abstand (A2) der Rippe (1.44) von dem dünneren Randsteg (1.43).

6. Querlenker nach den Ansprüchen 3 und 4 oder nach Anspruch 5, **dadurch gekennzeichnet, dass** die Rippe (1.44) eine Höhe aufweist, die kleiner als die Höhe (S) oder gleich der Höhe der von dem Mittel- oder Quersteg (1.41) des Verbindungselements (1.4) vorstehenden Randstege (1.42, 1,43) ist.

7. Querlenker nach einem der Ansprüche 1 bis 6,
**dadurch gekennzeichnet, dass** das Verbindungselement (1.4) einen die Verbindungsarme (1.4a, 1.4b) miteinander verbindenden Kehlsteg (1.45) aufweist, der an dem das Kugelgelenklager (4) aufweisenden Lagerelement (1.3) angeordnet ist.

8. Querlenker nach Anspruch 7,
**dadurch gekennzeichnet, dass** der Kehlsteg (1.45) in das mindestens eine weitere Lagerelement (1.3) einstückig übergeht.

9. Querlenker nach Anspruch 7 oder 8,
**dadurch gekennzeichnet, dass** der Kehlsteg (1.45) mit einem einstückig angeformten Randsteg (1.46) versehen ist, der mit dem Kehlsteg (1.45) einen im Wesentlichen rechten Winkel (α) definiert.

10. Querlenker nach Anspruch 9,
**dadurch gekennzeichnet, dass** der Randsteg (1.46) des Kehlsteges (1.45) eine Höhe aufweist, die kleiner als die Höhe oder gleich der Höhe des von dem Mittel- oder Quersteg (1.41) des Verbindungselements (1.4) vorstehenden Randsteges (1.42) ist.

11. Querlenker nach einem der Ansprüche 1 bis 10, **dadurch gekennzeichnet, dass** die Lagerelemente (1.1, 1.2), die eine gemeinsame Schwenkachse oder im Wesentlichen koaxial zueinander verlaufende Schwenkachsen definieren, jeweils mit einer einen Metall-Gummi-Verbund und/oder einer einen Kunststoff-Gummi-Verbund aufweisenden Lagerbuchse (9, 10, 11) versehen sind.

12. Querlenker nach einem der Ansprüche 1 bis 11, **dadurch gekennzeichnet, dass** an dem mindestens einen weiteren Lagerelement (1.3) ein Kragen (1.31) ausgebildet ist, der mindestens eine Ringnut (1.32) und/oder mindestens einen radial vorstehenden Vorsprung zur formschlüssigen Anbindung einer Dichtungsmanschette (8) aufweist.

13. Querlenker nach einem der Ansprüche 1 bis 12, **dadurch gekennzeichnet, dass** dieser Körperbereiche mit unterschiedlichem Faser-Füllstoff-Gewichtsanteilverhältnis, Kunstharz-Füllstoff-Gewichtsanteilverhältnis und/oder unterschiedlicher Faserbeschaffenheit, insbesondere Faserlänge aufweist.

## Claims

1. Transverse link (1) made of fibre-reinforced plastics material for a wheel suspension of a vehicle, which transverse link is pivotable on at least two of its bearing elements (1.1, 1.2) about a common pivot axis or about pivot axes running substantially coaxially with respect to one another, these at least two bearing elements (1.1, 1.2) being connected by a single-shell connecting element (1.4) having at least two connecting arms (1.4a, 1.4b) to at least one bearing element (1.3) having a ball and socket joint bearing (4), the bearing elements (1.1, 1.2, 1.3) and the connecting element (1.4) being elements of an integral plastics material moulded part, **characterised in that** the integral plastics material moulded part is produced by extrusion of plastics material containing fibres, the bearing elements (1.1, 1.2, 1.3) having bearing bushes (2, 10) or bearing shells (5) surrounded in a material-uniting manner by extrusion of the plastics material, the ball and socket joint bearing (4) having a bearing bush (2) or a shell-shaped sliding capsule (5), which is produced from plastics material and is connected in a material-uniting manner to the connecting element (1.4), the connecting element comprising a centre or transverse web (1.41) connecting the bearing elements (1.1, 1.2, 1.3), and at least one edge web (1.42, 1.43), which is connected to the centre or transverse web (1.41) and, with the latter, defines an angle (α), preferably substantially a right angle.

2. Transverse link according to claim 1, **characterised in that** the connecting element (1.4) has at least two edge webs (1.42, 1.43) projecting from the centre or transverse web (1.41).

3. Transverse link according to claim 2, **characterised in that** the edge webs (1.42, 1.43) are configured with a different wall thickness, the wall thickness (W) of the thicker edge web (1.42) being at least 1.1 times, preferably at least 1.2 times, the wall thickness of the thinner edge web (1.43).

4. Transverse link according to either claim 2 or claim 3, **characterised in that** the connecting element (1.4) has at least one rib (1.44) running between the at least two edge webs (1.42, 1.43), the at least one rib (1.44) being integrally formed on the centre or transverse web (1.41) and extending at least over a partial length of the edge webs (1.42, 1.43) along the latter.

5. Transverse link according to claim 3 and claim 4, **characterised in that** the spacing (A1) of the at least one rib (1.44) from the thicker edge web (1.42) is smaller by at least 10%, preferably by at least 20%, than the spacing (A2) of the rib (1.44) from the thinner edge web (1.43).

6. Transverse link according to claim 3 and claim 4 or according to claim 5, **characterised in that** the rib (1.44) has a height, which is smaller than the height (S) or equal to the height of the edge webs (1.42, 1.43) projecting from the centre or transverse web (1.41) of the connecting element (1.4).

7. Transverse link according to any of claims 1 to 6, **characterised in that** the connecting element (1.4) has a throat web (1.45) connecting the connecting arms (1.4a, 1.4b) to one another, which throat web is arranged on the bearing element (1.3) having the ball and socket joint bearing (4).

8. Transverse link according to claim 7, **characterised in that** the throat web (1.45) passes integrally into the at least one further bearing element (1.3).

9. Transverse link according to either claim 7 or claim 8, **characterised in that** the throat web (1.45) is provided with an edge web (1.46) that is integrally formed on and, with the throat web (1.45), defines substantially a right angle (α).

10. Transverse link according to claim 9, **characterised in that** the edge web (1.46) of the throat web (1.45) has a height, which is smaller than the height or equal to the height of the edge web (1.42) projecting from the centre or transverse web (1.41) of the connecting element (1.4).

11. Transverse link according to any of claims 1 to 10, **characterised in that** the bearing elements (1.1,1.2), which define a common pivot axis or pivot axes running substantially coaxially with respect to one another, are in each case provided with a bearing bush (9, 10, 11) having a metal-rubber composite material and/or a plastics material-rubber composite material.

12. Transverse link according to any of claims 1 to 11, **characterised in that** a collar (1.31) is configured on the at least one further bearing element (1.3), said collar having at least one annular groove (1.32) and/or at least one radially projecting projection for the positive attachment of a sealing sleeve (8).

13. Transverse link according to any of claims 1 to 12, **characterised in that** the latter has body regions with a different fibre-filler weight proportion ratio, synthetic resin-filler weight proportion ratio and/or a different fibre configuration, in particular fibre length.

## Revendications

1. Bras transversal (1) en matière plastique renforcée par des fibres pour une suspension de roue d'un véhicule automobile, dont deux de ses éléments de palier (1.1, 1.2) peuvent pivoter autour d'un axe de pivotement commun ou autour d'axes qui s'étendent sensiblement coaxialement l'un par rapport à l'autre, sachant que ces éléments de palier (1.1, 1.2), prévus au moins au nombre de deux, sont reliés, par l'intermédiaire d'un élément de liaison monocoque (1.4) doté d'au moins deux bras de liaison (1.4a, 1.4b), à un élément de palier (1.3) qui est doté d'un palier à rotule sur billes (4), sachant que les éléments de palier (1.1, 1.2, 1.3) et l'élément de liaison (1.4) sont des éléments d'une pièce en matière synthétique formée d'une pièce, **caractérisé en ce que** la pièce en matière plastique formée d'une pièce est fabriquée par formage par fluage de matière plastique contenant des fibres, sachant que les éléments de palier (1.1, 1.2, 1.3) sont dotés de coussinets (2, 10) ou de coquilles de coussinets (5), intégrés par liaison de matière par le formage par fluage de la matière plastique, sachant que le palier à rotule sur billes (4) est doté d'un coussinet (2) ou d'une capsule coulissante (5) en forme de coque, qui est fabriquée en matière plastique et est reliée à l'élément de liaison (1.4) par liaison de matière, sachant que l'élément de liaison comprend une barre centrale ou transversale (1.41), qui relie les éléments de palier (1.1, 1.2, 1.3), et au moins une barre marginale (1.42, 1.43), qui est reliée à la barre centrale ou transversale (1,41) et définit avec celle-ci un angle (α) qui, de préférence, est un angle sensiblement droit.

2. Bras transversale selon la revendication 1,
**caractérisé en ce que** l'élément de liaison (1.4) est doté d'au moins deux barres marginales (1.42, 1.43) qui sont en saillie de la barre centrale ou transversale (1.41).

3. Bras transversale selon la revendication 2,
**caractérisé en ce que** les barres marginales (1.42, 1.43) présentent des épaisseurs de paroi différentes, sachant que la paroi (W) de la barre marginale (1.42) épaisse est 1,1 fois, de préférence 1,2 fois plus épaisse que la paroi de la barre marginale (1.43) mince.

4. Bras transversale selon revendication 2 ou 3,
**caractérisé en ce que** l'élément de liaison (1.4) est doté d'au moins une nervure (1.44), qui s'étend entre les deux barres marginales (1.42, 1.43) au moins prévues, sachant que la nervure (1.44) au moins prévue est formée d'une pièce sur la barre centrale ou transversale (1.41) et s'étend le long des barres marginales (1.42, 1.43), au moins sur une partie de la longueur de celles-ci.

5. Bras transversale selon les revendications 3 et 4,
**caractérisé en ce que** l'intervalle (A1) entre la nervure (1.44) au moins prévue et la barre marginale la plus épaisse (1.42) est d'au moins 10 %, de préférence d'au moins 20 % plus petit que l'intervalle (A2) entre la nervure (1.44) et la barre marginale la plus mince (1.43).

6. Bras transversale selon les revendications 3 et 4 ou selon la revendication 5,
**caractérisé en ce que** la nervure (1.44) est dotée d'une hauteur qui est inférieure à la hauteur (S) ou égale à la hauteur des barres marginales (1.42, 1.43) en saillie de la barre centrale ou transversale (1.41) de l'élément de liaison (1.4).

7. Bras transversale selon l'une des revendications 1 à 6,
**caractérisé en ce que** l'élément de liaison (1.4) est doté d'une barre incurvée (1.45) qui, reliant les bras de liaison (1.4a, 1.4b), est agencée sur l'élément de palier (1.3) pourvu du palier à rotule sur billes (4).

8. Bras transversale selon la revendication 7,
**caractérisé en ce que** la barre incurvée (1.45) se raccorde d'une pièce à au moins un autre élément de palier (1.3).

9. Bras transversale selon revendication 7 ou 8,
**caractérisé en ce que** la barre incurvée (1.45) est pourvue d'une barre marginale (1.46) qui définit, avec la barre incurvée (1.45), un angle (α) sensiblement droit.

10. Bras transversale selon la revendication 9,
**caractérisé en ce que** la barre marginale (1.46) de la barre incurvée (1.45) est dotée d'une hauteur qui est inférieure à la hauteur ou égale à la hauteur de la barre marginale (1.42) en saillie de la barre centrale ou transversale (1.41) de l'élément de liaison (1.4).

11. Bras transversale selon l'une des revendications 1 à 10,
**caractérisé en ce que** les éléments de palier (1.1, 1.2), qui définissent un axe de pivotement commun ou des axes de pivotement s'étendant coaxialement l'un par rapport à l'autre, sont dotés chacun d'un coussinet (9, 10, 11) qui présente une liaison métal - caoutchouc et / ou une liaison matière plastique - caoutchouc.

12. Bras transversale selon l'une des revendications 1 à 11,
**caractérisé en ce que**, sur au moins un autre élément de palier (1.3), est formée une collerette (1.31) qui est dotée d'au moins une rainure annulaire (1.32) et / ou d'au moins une saillie radiale pour la liaison par engagement géométrique d'une manchette d'étanchéité (8).

13. Bras transversale selon l'une des revendications 1 à 12,
**caractérisé en ce que** celui-ci est doté de régions qui présentent des rapports de poids fibres - matières de charge, des rapports de poids résine synthétique - matières de charge et / ou des constitutions de fibres, en particulier des longueurs de fibres, différents.
